(19) Europäisches Patentamt
European Patent Office
Office européen des brevets

(11) **EP 2 737 287 B1**

(12) **EUROPÄISCHE PATENTSCHRIFT**

(45) Veröffentlichungstag und Bekanntmachung des Hinweises auf die Patenterteilung:
**11.08.2021  Patentblatt 2021/32**

(21) Anmeldenummer: **12738450.1**

(22) Anmeldetag: **23.07.2012**

(51) Int Cl.:
**B06B 1/02** $^{(2006.01)}$

(86) Internationale Anmeldenummer:
**PCT/EP2012/064382**

(87) Internationale Veröffentlichungsnummer:
**WO 2013/017452 (07.02.2013 Gazette 2013/06)**

(54) **VERFAHREN ZUR BERECHNUNG DER SCHWINGUNGSAMPLITUDE EINER SONOTRODE**

METHOD FOR CALCULATING THE OSCILLATION AMPLITUDE OF A SONOTRODE

PROCÉDÉ DE CALCUL DE L'AMPLITUDE DE VIBRATION D'UNE SONOTRODE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2011  DE 102011052283**

(43) Veröffentlichungstag der Anmeldung:
**04.06.2014  Patentblatt 2014/23**

(73) Patentinhaber: **Herrmann Ultraschalltechnik GmbH & Co. KG
76307 Karlsbad (DE)**

(72) Erfinder: **JURZITZA, Dieter
76131 Karlsruhe (DE)**

(74) Vertreter: **WSL Patentanwälte Partnerschaft mbB
Kaiser-Friedrich-Ring 98
65185 Wiesbaden (DE)**

(56) Entgegenhaltungen:
**EP-A1- 1 190 804      EP-A1- 2 151 283
EP-A2- 0 662 356      EP-A2- 1 216 760
EP-A2- 1 738 837      EP-A2- 2 011 577
US-A1- 2006 144 902**

**EP 2 737 287 B1**

**Beschreibung**

Die vorliegende Erfindung betrifft ein Verfahren zur Bestimmung der Schwingungsamplitude einer von einem Konverter angeregten Sonotrode.

Beim Ultraschallschweißen oder Ultraschallschneiden wird im Allgemeinen eine mit einer Schweiß- oder Schneidfläche ausgestattete Sonotrode mit einer Ultraschallschwingung beaufschlagt und zum Schweißen oder Schneiden auf ein Gegenwerkzeug zugefahren, so dass das zu schweißende oder zu schneidende Material zwischen Sontrode einerseits und Gegenwerkzeug andererseits geführt wird.

Um die Sonotrode in Schwingung zu versetzen, ist diese gegebenenfalls über einen Amplitudentransformator mit einem Konverter verbunden. Der Konverter wandelt die an ihm anliegende elektrische Wechselspannung in eine mechanische Schwingung um. Der gegebenenfalls zwischengeschaltete Amplitudentransformator ändert die Amplitude, ohne jedoch die Frequenz der Schwingung zu verändern. An den Konverter ist in der Regel ein Stromerzeuger, auch Generator genannt, angeschlossen, der eine elektrische Wechselspannung erzeugt. Um eine nennenswerte Energiemenge von der Sonotrode auf das zu bearbeitende Werkstück zu übertragen, ist es notwendig, dass die Ultraschallschwingeinheit, die aus dem Konverter, der Sonotrode und gegebenenfalls dem Amplitudentransformator besteht, mit der für die Schweissung relevanten Eigenfrequenz angeregt wird, so dass sich innerhalb der Ultraschallschwingeinheit eine stehende Ultraschallwelle ausbildet. Daher wird der Generator auf das Ultraschallschwingsystem angepasst, so dass er die Wechselspannung mit der gewünschten Eigenfrequenz bereitstellt.

In der Regel wird ein Generator verwendet, dessen Frequenz innerhalb eines engen Frequenzbandes, z. B. zwischen 19,7 kHz und 20,3 kHz, eingestellt werden kann.

Zum Einstellen des Generators wird dann die anzuregende Ultraschallschwingeinheit nacheinander mit Spannungen unterschiedlichen Frequenzen beaufschlagt und jeweils die Schwingungsamplitude der Sonotrode gemessen. Die Anregungsfrequenz, welche die nominale Schwingungsamplitude der Sonotrode bewirkt, ist die Arbeitsfrequenz.

Um die Schwingungsamplitude der Sonotrode zu messen, ist es üblich, ein der mechanischen Amplitude der Sonotrode proportionales elektrisches Signal über eine Messung des Stromes abzuleiten, der in eine Parallelschaltung aus Konverter und einer Spule $L_K$ hineinfließt.

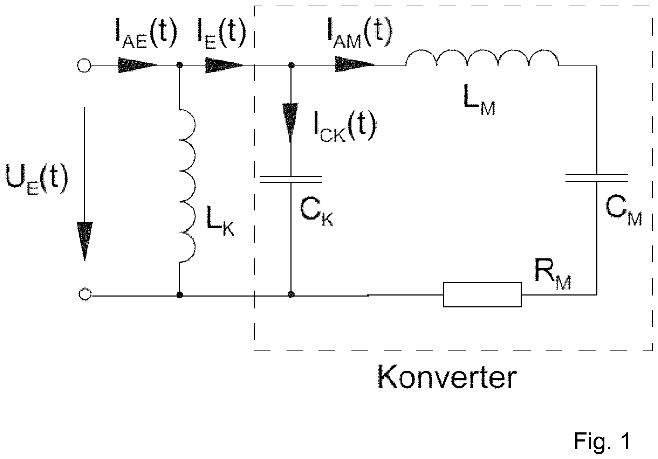

Ein Ersatzschaltbild ist in Figur 1 gezeigt. An dem Eingang des Konverters liegt die vom Generator erzeugte Spannung $U_E(t)$ an. Die Größe dieser Spannung hängt sowohl von dem Stromerzeuger, zum Beispiel von dessen Innenwiderstand, als auch von den ohmschen, kapazitiven und induktiven Widerständen des Konverters ab.

Man erkennt in Figur 1, dass der Konverter aus einer Reihenschaltung einer Spule mit der Induktivität $L_M$,, einem Kondensator mit der Kapazität $C_M$ und einem ohmschen Widerstand $R_M$ besteht, wobei parallel hierzu eine Konverterkapazität $C_K$ geschaltet ist.

Dies hat zur Folge, dass der in den Konverter hineinfließende Strom $I_E(t)$ sich in den Strom $I_{AM}(t)$, welcher die eigentliche Schwingung erzeugt, und den Strom $I_{CK}(t)$ in die Konverterkapazität aufteilt. Die Konverterkapazität $C_K$ ist von dem Aufbau des Konverters abhängig. Sie kann aus Messungen ermittelt werden. Dies kann beispielsweise durch Aufnahme und Auswertung einer Impedanzkurve erfolgen.

Üblicherweise wird parallel zu dem Konverter eine Spule $L_K$ geschaltet, die so dimensioniert ist, dass bei der gewünschten Betriebsfrequenz (beispielsweise 20 kHz) ein Resonanzkreis mit der Konverterkapazität $C_K$ entsteht, welcher den Blindstrom $I_{CK}(t)$ des Kondensators $C_K$ kompensiert. Durch diese Maßnahme arbeitet der Resonanzkreis als Sperrkreis, so dass im Ergebnis durch den Sperrkreis kein Strom fließt und der Strom $I_{AE}(t)$ aus dem Generator mit dem Strom $I_{AM}(t)$ durch die Spule $L_M$ übereinstimmt. Es ist daher eine direkte Messung des Amplitudenstromes $I_{AE}$ möglich, wobei der Amplitudenstrom $I_{AE}(t)$ für eine feste Frequenz bei sinusförmiger Anregung proportional zur Geschwindigkeit der Sonotrodenschwingung ist.

Im Resonanzfall unterscheidet sich somit der Strom $I_{AE}(t)$ von dem in den Konverter einfließenden Strom $I_E(t)$ durch den über die Spule $L_K$ bereitgestellten Kompensationsstrom $I_{CK}(t)$.

Die bekannte Vorgehensweise geht von der Voraussetzung aus, dass der Strom $I_E(t)$ sowie auch die Spannung $U_E(t)$ sinusförmig sind beziehungsweise zumindest von der Grundwelle dominiert werden. Das trifft jedoch nur bei manchen Betriebszuständen zu. In der Regel ist der Strom $I_E(t)$ nichtlinear verzerrt. Dies liegt unter anderem daran, dass die Sonotrode während des Betriebes mit dem zu bearbeitenden Material in Kontakt tritt, was die Schwingungsamplitude verzerrt. Zudem wird im Zeitpunkt der Berührung die Eigenfrequenz des Schwingungsgebildes geändert, was ebenso zu einer Verzerrung der Schwingungsamplitude führt.

In der in Figur 1 gezeigten Situation stimmt daher die Größe $I_{AE}(t)$ nur ungefähr mit dem Strom $I_{AM}(t)$ überein. Im Grunde genommen ist die Übereinstimmung nur für eine einfache Sinusschwingung gegeben. Sobald Oberwellen oder andere Verzerrungen auftreten, kommt es zu Abweichungen. Dies hat zur Folge, dass insbesondere bei einem hohen Oberwellengehalt des Hochfrequenzstroms $I_E(t)$ der in den Kompensationskreis hineinfließende Strom $I_{AE}(t)$ nicht mehr notwendigerweise proportional zum eigentlichen Amplitudenstrom $I_{AM}(t)$ ist.

Die Sonotrode als $\lambda/2$-Leiter sowie das Amplitudentransformationsstück transformieren die nicht sinusförmige Bewegung in eine ebenfalls nicht sinusförmige Bewegung des Keramikstapels im Konverter, die sich wiederum als entsprechendes Stromsignal in das elektrische System abbildet.

Die Abweichung von der Sinuskurvenform ist für den eigentlichen Schweißvorgang selbst unproblematisch. Die Abweichung verfälscht aber die Messung der mechanischen Schwingungsamplitude.

Diese nichtlinearen Abweichungen lassen sich durch das bekannte Messverfahren nicht abbilden. Dadurch kann es zu deutlich überhöhten Schwingungsamplituden am Ultraschallschwingsystem kommen. Das kann dazu führen, dass das Ultraschallschwingsystem (Konverter, gegebenenfalls Amplitudentransformationsstück und Sonotrode) beschädigt oder sogar zerstört wird.

Es ist daher Aufgabe der vorliegenden Erfindung, ein Verfahren zur Bestimmung der Schwingungsamplitude einer von einem Konverter angeregten Sonotrode bereitzustellen, das die oben genannten Nachteile möglichst verhindert.

Die EP 2 151 283 A1 beschreibt eine Schwingungsvorrichtung mit automatischer Frequenzanpassung während des Betriebs, welche einen elektroakustischen Konverter aufweist, der mit einem Verstärker verbunden ist, der in einen Rückkopplungsschaltkreis integriert ist, sowie mit einer Stromversorgung. Die Vorrichtung ist mit einem Stromintensitätssensor versehen, der in dem Stromkreis des elektroakustischen Konverters angeordnet ist, welcher durch den mit einem Phasenschieber versehenen Rückkopplungsschaltkreis gebildet wird.

In der EP 1 738 837 A2 wird eine Schaltungsanordnung zum Betreiben eines Ultraschall-Schwingers beschrieben mit einem Verstärker mit einem Eingang und einem Ausgang, welcher Ausgang die Erregungsspannung sowie den Erregungsstrom für das Ultraschall-Schwingungssystem liefert, und einem Oszillator, dessen Frequenz an einem Steuereingang einstellbar ist und dessen Ausgang mit dem Eingang des Verstärkers verbunden ist, sowie einem Stromsensor, zur Erfassung des Erregerstroms, wobei ein Spannungssensor vorhanden ist, zur Erfassung der Erregungsspannung.

Aus der EP 0 662 356 A2 ist ein Verfahren zum Betrieb eines Generators zur HF-Energieversorgung eines Ultraschallwandlers für dessen Betrieb in einem Resonanzzustand, insbesondere zum Ultraschallschweißen, bekannt, wobei der Phasenwinkel zwischen dem Strom und der Spannung am Ausgang des Generators gemessen und zur Frequenzregelung des Generators verwendet wird, wobei zusätzlich zum Phasenwinkel der Strom, die Spannung und/oder die Schein- oder Wirkleistung am HF-Ausgang des Generators als zusätzliche Regelgröße digital verarbeitet und mit dem Phasenwinkel digital verknüpft werden, um die gewünschte Resonanzfrequenz des Generators zu bestimmen.

In der EP 1 216 760 A2 wird ein Leistungsgenerator für einen Ultraschallschweißkopf beschrieben, der aus einem Emitter, einem mechanischen Verstärker und einer Sonotrode besteht, um einem Ultraschallkonverter Energie in Form eines voreingestellten Wechselamplituden- und Frequenzsignals zuzuführen. Der Leistungsgenerator umfasst eine Stromversorgung, einen mit der Stromversorgung verbundenen Stromrichter, der ein Rechtecksignal aus dem Ausgangssignal der Stromversorgung erzeugt, einen Leistungstransformator, der das Recktecksignal in ein für den Konverter verwertbares Signal transformiert, eine Phasen- und Frequenzsteuerung zum Steuern des Stromrichters, einen Mikrocontroller, der die Phasen- und Frequenzsteuerung und den Stromrichter steuert und einen Dienstlogikzubringer, um die Frequenz und Leistung eines Pilotsignals des Konverters zu steuern, um die Frequenz des Generators auf die des Emitters abzustimmen und Frequenzschwankungen der Sonotrode zu kompensieren.

Erfindungsgemäß wird diese Aufgabe dadurch gelöst, dass die von dem Stromerzeuger an den Konverter angelegte Spannung $U_E(t)$ und der von dem Stromerzeuger bereitgestellte und durch den Konverter fließende Strom $I_E(t)$ gemessen und hieraus die Schwingungsamplitude der Sonotrode oder eine mit der Schwingungsamplitude in Relation stehende Feldgröße des elektrischen Schwingsystems bestehend aus dem Stromerzeuger und dem Konverter berechnet wird.

Dadurch, dass die Schwingungsamplitude aus dem gemessenen Strom und der gemessenen Spannung berechnet wird, kann die Parallelschaltung einer Spule entfallen. Dies führt nicht nur zu einer Vereinfachung des Generators, sondern ermöglicht es auch, dass der Generator für unterschiedliche Ultraschallschwingsysteme, die mit unterschiedlichen Eigenfrequenzen angeregt werden sollen, verwendet werden können. Bei den bekannten Generatoren ist nur eine sehr begrenzte Einstellbarkeit der Anregungsfrequenz möglich, da die Anregungsfrequenz immer in etwa mit der Resonanzfrequenz des von der parallel geschalteten Spule und der Konverterkapazität gebildeten Schwingkreises übereinstimmen muss. Diese Beschränkung entfällt bei dem erfindungsgemäßen Verfahren, da die Schwingungsamplitude der Sonotrode nun berechnet wird. Am besten wird eine Feldgröße berechnet, die proportional zu der Schwingungsamplitude der Sonotrode ist.

In einer bevorzugten Ausführungsform wird aus der gemessenen Spannung $U_E(t)$ der Strom $I_{CK}(t)$ durch die Kapazität $C_K$ des Kondensators berechnet, wobei der Amplitudenstrom $I_{AM}(t)$ berechnet wird zu $I_{AM}(t) = I_E(t) - I_{CK}(t)$. Daraus wird die Schwingungsamplitude der Sonotrode oder eine mit der Schwingungsamplitude in Relation stehende Feldgröße berechnet.

In einer weiteren bevorzugten Ausführungsform wird der Strom $I_{CK}(t)$ dadurch berechnet, dass zunächst die gemessene Spannung $U_E(t)$ nach der Zeit differenziert wird und das Ergebnis dann mit der Kapazität des Konverters $C_K$ multipliziert wird:

$$I_{CK}(t) = \frac{dU_E(t)}{dt} \bullet C_K$$

Der zur Geschwindigkeit der Sonotrodenschwingung proportionale Amplitudenstrom $I_{AM}$ (t) kann somit durch einfache Subtraktion des berechneten Kondensatorstroms $I_{CK}$ (t) vom gemessenen Hochfrequenzstrom $I_E$ (t) bestimmt werden.

Um die gewünschte Amplitude zu berechnen kann nun der Amplitudenstrom $I_{AM}$ (t) über die Zeit integriert werden. Für den Spezialfall sinusförmiger Eingangssignale reduziert sich die Integration auf die Division durch die Kreisfrequenz $\omega$. Für nicht sinusförmige Signale muss stattdessen die Integration durchgeführt werden. Das Ergebnis der Integration wird dann noch mit einer zu bestimmenden Proportionalitätskonstanten C multipliziert, um die Schwingungsamplitude zu berechen. Die Bestimmung der Proportionalitätskonstanten kann beispielsweise durch eine einmalige Messung der Schwingungsamplitude und Vergleich mit der berechneten Größe durchgeführt wird. Nach einmalig erfolgter Bestimmung von C kann dann durch das beschriebenen Verfahren jederzeit allein aus den beiden gemessenen elektrischen Größen die momentane Schwingungsamplitude des Ultraschallschwingsystems berechnet werden. Durch dieses Verfahren können auch die amplitudentransformierenden Eigenschaften von Sonotrode und/oder Amplitudentransformator berücksichtigt werden.

Weitere Vorteile, Merkmale und Anwendungsmöglichkeiten werden deutlich anhand der folgenden Beschreibung einer bevorzugten Ausführungsform.

Bei einer bevorzugten Ausführungsform ist die Sonotrode über einen Amplitudentransformator mit einem Konverter verbunden, dessen piezoelektrischen Elemente eine von einem Stromerzeuger bereitgestellte Wechselspannung in eine mechanische Schwingung umwandeln. Als Stromerzeuger wird ein digitaler Ultraschallgenerator verwendet. Sowohl die Konverterspannung $U_E$ (t) als auch der Strom $I_E$ (t) werden zum Beispiel mit Hilfe eines Analog-Digitalwandlers kontinuierlich aber zeitdiskret, d.h. in kurzen Abständen, erfasst.

Die derart gemessene Spannung wird nach der Zeit differenziert. Die Berechnung der Ableitung der Spannungszeitfunktion trägt auch dem Umstand Rechnung, dass neben der Grundschwingung Oberwellen im gemessenen Stromsignal $I_E$ (t) beziehungsweise Spannungssignal $U_E$ (t) vorhanden sind. Der Amplitudenstrom $I_{AM}$ (t) wird dadurch mit all seinen Spektralkomponenten erfasst.

Die in Figur 1 gezeigte Kompensationsinduktivität $L_K$ kann hierzu im Übrigen entfallen, da sie nicht mehr benötigt wird, um mit der Konverterkapazität $C_K$ einen Sperrkreis zu bilden. Dadurch wird der Aufbau des Generators deutlich vereinfacht. Beim Entfall der Kompensationsinduktivität ist im übrigen $I_{AE}$ (t) = $I_E$ (t), da der vom Generator abgegebene Strom vollständig in den Konverter fließt und die Kompensationsinduktivität keinen zusätzlichen Strom zur Verfügung stellt.

Die abgeleitete Spannung $\left(\dfrac{dU_E(t)}{dt}\right)$ wird dann mit der gemessenen Kapazität des Konverters $C_K$ multipliziert, woraus man den Strom $I_{CK}$(t) durch die Kapazität des Konverters erhält. Der Amplitudenstrom $I_{AM}$(t) ergibt sich dann zu $I_{AM}$ (t) = $I_E$ (t) - $I_{CK}$ (t) . Der Amplitudenstrom $I_{AM}$(t) wird dann noch über die Zeit integriert, um ein zu der Amplitude der Sonotrodenschwingung proportionales Signal zu erhalten.

Im Unterschied zu dem bisher verwendeten Verfahren sind keine Änderungen am Konverter oder dem Generator notwendig, wenn die Betriebsfrequenz geändert wird. Da der Kondensatorstrom durch die Ableitung der Konverterspannung und anschließender Gewichtung mit einem geeigneten Gewichtsfaktor gewonnen wird, kann diese Anpassung einfach durch Modifikation des Zahlenwertes für die Kapazität $C_K$ gewonnen werden. So lassen sich beispielsweise auch Auswirkungen von größeren Leitungslängen beim Zuleitungskabel berücksichtigen, indem bei der Berechnung des Stromes $I_{CK}$(t) von einer entsprechend größeren Gesamtkapazität $C_K$ ausgegangen wird.

So ist es beispielsweise denkbar, dass das Ultraschallsystem die Eingabe einer Leitungslänge erlaubt, wodurch dann automatisch der Zahlenwert für die Kapazität $C_K$ entsprechend angepasst wird, so dass auch bei geänderter Leitungslänge ein Signal erzeugt wird, welches proportional zur Schwingungsamplitude der Sonotrode ist.

**Patentansprüche**

1. Verfahren zur Bestimmung der Schwingungsamplitude einer von einem Konverter angeregten Sonotrode, wobei der Konverter mit einem Stromerzeuger verbunden ist und der von dem Stromerzeuger bereitgestellte und durch den Konverter fließende Strom $I_E$(t) gemessen wird, **dadurch gekennzeichnet, dass** die von dem Stromerzeuger an den Konverter angelegte Spannung $U_E$(t) gemessen wird und aus der gemessenen Spannung $U_E$(t) und aus dem gemessenen Strom $I_E$(t) die Schwingungsamplitude der Sonotrode oder eine mit der Schwingungsamplitude der Sonotrode in Relation stehende Feldgröße des elektrischen Schwingsystems bestehend aus dem Stromerzeuger und dem Konverter berechnet wird.

2. Verfahren nach Anspruch 1, **dadurch gekennzeichnet, dass** der Strom $I_{CK}$(t) durch die Kapazität $C_K$ des Kondensators berechnet wird, wobei der Amplitudenstrom $I_{AM}$(t) berechnet wird zu $I_{AM}$ (t) = $I_E$ (t) - $I_{CK}$ (t) und dass daraus die Schwingungsamplitude der Sonotrode oder eine mit der Schwingungsamplitude in Relation stehende Feldgröße berechnet wird.

**3.** Verfahren nach Anspruch 1 oder 2, **dadurch gekennzeichnet, dass** die gemessene Spannung $U_E(t)$ nach der Zeit differenziert wird $(\dfrac{dU_E(t)}{dt})$ und daraus die Schwingungsamplitude der Sonotrode oder eine mit der Schwingungsamplitude in Relation stehende Feldgröße berechnet wird.

**4.** Verfahren nach Anspruch 3, **dadurch gekennzeichnet, dass** $(\dfrac{dU_E(t)}{dt})$ mit der Kapazität des Konverters $C_K$ multipliziert wird, um den Strom $I_{CK}(t)$ durch die Kapazität des Konverters zu berechnen, wobei daraus die Schwingungsamplitude der Sonotrode oder eine mit der Schwingungsamplitude in Relation stehende Feldgröße berechnet wird .

**5.** Verfahren nach einem der Ansprüche 2 bis 4, **dadurch gekennzeichnet, dass** die Bestimmung der Schwingungsamplitude der Sonotrode mit Hilfe einer Integration des Amplitudenstrom $I_{AM}(t)$ über der Zeit erfolgt.

**6.** Verfahren nach Anspruch 5, **dadurch gekennzeichnet, dass** die Schwingungsamplitude durch einer Integration des Amplitudenstrom $I_{AM}(t)$ über der Zeit und Multiplikation des Ergebnisses der Integration mit einer Proportionalitätskonstanten C erfolgt.

**7.** Verfahren nach einem der Ansprüche 1 bis 6, **dadurch gekennzeichnet, dass** die amplitudentransformierenden Eigenschaften von Sonotrode und/oder Amplitudentransformator durch Korrekturfaktoren bei der Amplitudenberechnung berücksichtigt werden, wobei vorzugsweise ein zu der Schwingungsamplitude proportionales Signal berechnet wird und dieses mit einer zu bestimmenden Proportionalitätskonstanten multipliziert wird.

**8.** Verfahren nach einem der Ansprüche 1 bis 6, **dadurch gekennzeichnet, dass** die Berechnungen numerisch durchgeführt werden.

**9.** Verfahren nach einem der Ansprüche 1 bis 8, **dadurch gekennzeichnet, dass** der Generator über ein Kabel der Länge L mit dem Konverter verbunden ist und dass für die Berechnung die Kapazität des Konverters $C_K$ um eine Kabelkorrektur $C_{Kabel}$ korrigiert wird, wobei die Größe von $C_{Kabel}$ von der Länge L abhängt.

**10.** Verfahren nach einem der Ansprüche 1 bis 9, **dadurch gekennzeichnet, dass** die folgenden Schritte durchgeführt werden:

i) Messung der Kapazität $C_K$ des Konverters,
ii) Messung des durch den Konverter fließenden Stroms $I_E(t)$,
iii) Messung der an den Konverter angelegten Spannung $U_E(t)$,
iv) Berechnung des Stroms $I_{CK}$ durch die Kapazität des Konverters mittels der Gleichung

$$I_{CK}(t) = \frac{dU_E(t)}{dt} \bullet C_K \, ,$$

v) Berechnung des Stromes mittels der Gleichung $I_{AM}(t) = I_E(t) - I_{CK}(t)$
vi) Berechnung eines zu der Schwingungsamplitude der Sonotrode proportionalen Signales $A_0$ durch $A_0 = \int I_{AM}(t)dt$,
vii) Berechnung der Schwingungsamplitude $A_{Son}$ der Sonotrode durch die Gleichung $A_{Son} = C \bullet A_0$, wobei C eine zu wählende Proportionalitätskonstante ist.

## Claims

**1.** A method of determining the vibration amplitude of a sonotrode excited by a converter, wherein the converter is connected to a current generator and the current $I_E(t)$ which is provided by the current generator and which flows through the converter is measured, **characterised in that** the voltage $U_E(t)$ applied to the converter by the current generator is measured and the vibration amplitude of the sonotrode or a field magnitude of the electric vibration system comprising the current generator and the converter, which field magnitude is related to the vibration amplitude of the sonotrode, is calculated from the measured voltage $U_E(t)$ and from the measured current $I_E(t)$.

**2.** A method according to claim 1 **characterised in that** the current $I_{CK}(t)$ is calculated through the capacitance $C_K$ of the capacitor, wherein the amplitude current $I_{AM}(t)$ is calculated as $I_{AM}(t) = I_E(t) - I_{CK}(t)$ and that the vibration amplitude of the sonotrode or a field magnitude related to the vibration amplitude is calculated therefrom.

**3.** A method according to claim 1 or claim 2 **characterised in that** the measured voltage $U_E(t)$ is differentiated in respect of time $(\dfrac{dU_E(t)}{dt})$ and the vibration amplitude of the sonotrode or a field magnitude related to the vibration amplitude is calculated therefrom.

**4.** A method according to claim 3 **characterised in that** $\left(\dfrac{dU_E(t)}{dt}\right)$ is multiplied by the capacitance of the converter $C_K$ to calculate the current $I_{CK}(t)$ through the capacitance of the converter, wherein the vibration amplitude of the sonotrode or a field magnitude related to the vibration amplitude is calculated therefrom.

**5.** A method according to one of claims 2 to 4 **characterised in that** the operation of determining the vibration amplitude of the sonotrode is effected by means of integration of the amplitude current $I_{AM}(t)$ over time.

**6.** A method according to claim 5 **characterised in that** the vibration amplitude is effected by integration of the amplitude current $I_{AM}(t)$ over time and multiplication of the result of the integration by a proportionality constant C.

**7.** A method according to one of claims 1 to 6 **characterised in that** the amplitude-transforming properties of the sonotrode and/or amplitude transformer are taken into consideration by correction factors in amplitude calculation, wherein preferably a signal proportional to the vibration amplitude is calculated and same is multiplied by a proportionality constant to be determined.

**8.** A method according to one of claims 1 to 6 **characterised in that** the calculations are performed numerically.

**9.** A method according to one of claims 1 to 8 **characterised in that** the generator is connected to the converter by way of a cable of the length L and that for the calculation the capacitance of the converter $C_K$ is corrected by a cable correction $C_{cable}$, wherein the value of $C_{cable}$ depends on the length L.

**10.** A method according to one of claims 1 to 9 **characterised in that** the following steps are performed:

    i) measurement of the capacitance $C_K$ of the converter,
    ii) measurement of the current $I_E(t)$ flowing through the converter,
    iii) measurement of the voltage $U_E(t)$ applied to the converter,
    iv) calculation of the current $I_{CK}$ through the capacitance of the converter by means of the equation

$$I_{CK}(t) = \frac{dU_E(t)}{dt} \bullet C_K \, ,$$

    v) calculation of the current by means of the equation $I_{AM}(t) = I_E(t) - I_{CK}(t)$,
    vi) calculation of a signal $A_0$ proportional to the vibration amplitude of the sonotrode by $A_0 = \int I_{AM}(t)dt$, and
    vii) calculation of the vibration amplitude $A_{Son}$ of the sonotrode by the equation $A_{Son} = C \bullet A_0$, wherein C is a proportionality constant to be selected.

**Revendications**

**1.** Procédé de calcul de l'amplitude de vibration d'une sonotrode excitée par un convertisseur, le convertisseur étant relié à un générateur de courant et le courant $I_E(t)$ mis à disposition par le générateur de courant et passant par le convertisseur étant mesuré, **caractérisé en ce que** la tension $U_E(t)$ appliquée au convertisseur par le générateur de courant est mesurée et à partir de la tension $U_E(t)$ et du courant $I_E(t)$, l'amplitude de vibration de la sonotrode ou une valeur de champ en relation avec l'amplitude de vibration de la sonotrode, du système électrique de vibration constitué du générateur de courant et du convertisseur, est calculée.

**2.** Procédé selon la revendication 1, **caractérisé en ce que** le courant $I_{CK}(t)$ passant par la capacité $C_K$ du condensateur est calculé, le courant d'amplitude $I_{AM}(t)$ étant calculé par $I_{AM}(t) = I_E(t) - I_{CK}(t)$, et **en ce que**, partant de celui-ci, l'amplitude de vibration de la sonotrode ou une valeur de champ en relation avec l'amplitude de champ, est calculée.

**3.** Procédé selon la revendication 1 ou 2, **caractérisé en ce que** la tension mesurée $U_E(t)$ est dérivée par rapport au temps $\left(\dfrac{dU_E(t)}{dt}\right)$ et **en ce que**, partant de celle-ci, l'amplitude de vibration de la sonotrode ou une valeur de champ en relation avec l'amplitude de champ, est calculée.

**4.** Procédé selon la revendication 3, **caractérisé en ce que** $\left(\dfrac{dU_E(t)}{dt}\right)$ est multiplié par la capacité $C_K$ du convertisseur pour calculer le courant $I_{CK}(t)$ passant par la capacité $C_K$ du condensateur, partant de celui-ci, l'amplitude de vibration de la sonotrode ou une valeur de champ en relation avec l'amplitude de champ, étant calculée.

**5.** Procédé selon l'une des revendications 2 à 4, **ca-**

**ractérisé en ce que** la détermination de l'amplitude de vibration est effectuée à l'aide de l'intégration du courant d'amplitude $I_{AM}(t)$ par rapport au temps.

6. Procédé selon la revendication 5, **caractérisé en ce que** la détermination de l'amplitude de vibration est effectuée par une intégration du courant d'amplitude $I_{AM}(t)$ par rapport au temps et une multiplication du résultat de l'intégration par une constante de proportionnalité C.

7. Procédé selon l'une des revendications 1 à 6, **caractérisé en ce que** les caractéristiques de transformation d'amplitude, de la sonotrode et/ou du transformateur d'amplitude sont prises en compte, de préférence, un signal proportionnel à l'amplitude de vibration étant calculé et celui-ci étant multiplié par une constante de proportionnalité à déterminer.

8. Procédé selon l'une des revendications 1 à 6, **caractérisé en ce que** les calculs sont effectués de façon numérique.

9. Procédé selon l'une des revendications 1 à 8, **caractérisé en ce que** le générateur est relié au convertisseur par un câble de longueur L, et **en ce que** pour le calcul, la capacité $C_K$ du convertisseur est corrigée par une correction de câble $C_{Kabel}$, la valeur de $C_{Kabel}$ étant fonction de la longueur L.

10. Procédé selon l'une des revendications 1 à 9, **caractérisé en ce que** les étapes suivantes sont effectuées :

> i) mesurer la capacité $C_K$ du convertisseur,
> ii) mesurer le courant $I_E(t)$ passant par le convertisseur,
> iii) mesurer la tension $U_E(t)$ appliquée au convertisseur,
> iv) calculer le courant $I_{CK}$ passant par la capacité du convertisseur à l'aide de l'équation
>
> $$I_{CK}(t) = \frac{dU_E(t)}{dt} \cdot C_K \,,$$
>
> v) calculer le courant à l'aide de l'équation $I_{AM}(t) = I_E(t) - I_{CK}(t)$,
> vi) calculer un signal $A_o$ proportionnel à l'amplitude de vibration de la sonotrode par $A_o = \int I_{AM}(t)\,dt$,
> vii) calculer l'amplitude de vibration Ason par l'équation $A_{Son} = C \cdot A_o$, C étant une constante de proportionnalité à choisir.

Konverter

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2151283 A1
- EP 1738837 A2
- EP 0662356 A2
- EP 1216760 A2